# EUROPEAN PATENT APPLICATION

(11) **EP 1 922 930 A2**
(43) Date of publication of application: **21.05.2008**
(21) Application number: 08002117.3
(22) Date of filing: 07.06.2004
(51) Int. Cl.: A01N 51/00, A01N 43/90, A01N 43/22, A01P 5/00, A01P 7/04

(54) **Pesticidal composition and method for seed treatment**

(30) Priority: 16.03.2004 US 553516 P
(62) Divisional of application: 04762989.4
(71) Applicant: Syngenta Participations AG, 4058 Basel (CH)
(72) Inventor: Hofer, Dieter, 4058 Basel (CH)
(74) Representative: Arunasalam, Velautha-Cumaran

(57) **Abstract**

A method of protecting a plant against shoot or foliar insects and/or representatives of the order Acarina, which comprises treating the plant propagation material thereof with (a) a nematicidally effective amount of a nematicide and (b) at least one insecticidally effective amount of an insecticide.

## Description

### Field of the Invention

The present invention relates to plant propagation material, such as a seed, treating pesticidal composition that is suitable for controlling shoot or foliar insects and/or representatives of the order Acarina, comprising (a) at least one nematicide and (b) at least one insecticide, and a method of protecting plants from such pests.

In particular, the present invention relates to a method of protecting a plant against shoot or foliar pests, such as insects and/or representatives of the order Acarina, which comprises treating the plant propagation material thereof with (a) a nematicidally effective amount of a nematicide and (b) at least one insecticidally effective amount of an insecticide, before its planting or sowing.

### Background of the Invention

Certain mixtures of active ingredients for controlling pests are described in the literature. The biological properties of those known mixtures are not entirely satisfactory in the areas of nematode control, phytotoxicity, loading rates and environmental and worker exposure, for example. The protection of plant propagation materials (seed treatments) with pesticides are target applications which partially address the need for a reduction of environmental and worker exposure when used alone or in conjunction with foliar or in-furrow pesticide applications. However, there is also a need to make available other mixtures which reduce the need for older acutely toxic pesticides and to reduce loading rates. Among the older nematicides the following may be mentioned: methyl bromide, metham sodium, ethoprop, carbofuran, aldicarb, fenamiphos and oxamyl, none of which were applied to the propagation material, such as a seed, before its sowing or planting. Accordingly, there is a need to provide pesticide compositions, in particular compositions that are used as plant propagation material treating compositions, and methods for the protection of plant propagation materials, especially those compositions having improved biological properties, for example synergistic pesticidal properties, especially for controlling nematodes and insects. That problem is solved according to the invention by the provision of the present pesticidal composition.

### Summary of the Invention

The present invention provides a composition for controlling nematodes and insects and/or representatives of the order Acarina, which composition comprises: (A) at least one nematicidally active macrolide compound, and (B) at least one insecticidally active compound selected from the neonicotinoids.

More specifically, the present invention provides a composition for controlling nematodes and insects and/or representatives of the order Acarina, which is particularly suitable for the protection of plant propagation materials such as crop seeds. The pesticidal composition of the present invention comprises: (A) an nematicidally effective amount of at least one macrolide compound, and (B) a insecticidally effective amount of at least one insecticide compound selected from the neonicotinoids.

The invention also relates to a process for protecting the plant propagation materials and the plants resulting therefrom against nematodes and fungal diseases using a pesticidal composition according to the invention further comprising one or more fungicides. It also relates to the said plant propagation materials coated with the said pesticidal composition.

The present invention makes it possible to dress or treat seeds and other plant propagation material with lower amounts of older acutely toxic biocides than is known from the prior art and, in most cases, replaces such older acutely toxic biocides; the invention therefore represents a material enrichment of the art.

The present invention further provides a method of protecting a plant against shoot or foliar pests, such as insects and/or representatives of the order Acarina, which comprises treating the plant propagation material thereof with (a) a nematicidally effective amount of a nematicide, such as a macrolide, and (b) at least one insecticidally effective amount of an insecticide, such as a neonicotinoid (e.g. imidacloprid (458), clothianidin (165) and thiamethoxam (792), a pyrethrin, a synthetic pyrethroid (e.g. tefluthrin (769) and lamda cyhalothrin (198)), and fipronil (354), before its planting or sowing.

### Description of Specific Embodiments

### Nematicide compound (A)

The pesticidal compositions according to the invention comprise as nematicidally active ingredient (A) a compound having nematicide activity as a plant propagation material treatment, preferably at least one macrolide compound selected from abamectin (1), emamectin benzoate (291) and spinosad (737).

Abamectin is a preferred macrolide compound (A).
The present invention also provides protection of plants against attack by nematodes by the treatment of plant propagation material thereof with a composition according to the present invention.

### Insecticide component (B)

The pesticidal compositions according to the invention comprise as insecticidally active ingredient (B) a compound selected from at least one neonicotinoid insecticide selected from (B1) imidacloprid (458), (B2) clothianidin (165) and (B3) thiamethoxam (792); at least one pyrethroid insecticide selected from tefluthrin (769), lamda cyhalothrin (198), and fipronil (354).

A description of the pesticides (e.g., fungicides, insecticides, nematicides) can be found in the e-Pesticide Manual, version 3.1, 13th Edition, Ed. CDC Tomlin, British Crop Protection Council, 2004-05- The number following the compound name is the entry number given in the Pesticide Manual.

### A.I. Combination

Surprisingly, it has been found that the combination of at least one nematicide active ingredient (A) with at least one insecticide active ingredient selected from (B1), (B2) and (B3) results in a quite unexpectedly enhanced action against nematodes and insects and/or provides other unexpected advantages when used in connection with plant propagation materials. The increase in action and/or other advantageous properties achieved with the combination according to the invention is significantly greater than the activity to be expected by the individual components, i.e. the activity is enhanced synergistically which, inter alia, extends the boundaries of the pesticidal activity of the compounds.

The inventive mixture is particularly suitable for dressing applications on plant propagation material. The latter term embraces seeds of all kinds (fruit, tubers, grains), cuttings, cut shoots and the like. Seeds are preferred. One particular field of application is the treatment of all kinds of seeds, in particular the seed treatment of cotton, fruiting vegetables incl. tomatoes and peppers, cucurbit vegetables incl. melons, cantaloupes, squash and cucumber.

In addition to the at least two component mixture, this invention also relates to a method of controlling insects and nematodes, which comprises treating a site, for example a plant or a plant propagation material (especially seed), that is infested or liable to be infested by insects and nematodes with: (1) at least one nematicidal active ingredient (A) and (2) at least one insecticidal active ingredient (B) in any desired sequence or simultaneously. The application is especially effective against shoot or foliar insects or representatives of the order Acarina.

The nematicide active ingredient generally is applied in a mixing ratio by weight (A):(B) of from 1:5 to 5:1. For example, in one embodiment, a nematicide, such as abamectin, (A) is applied at a rate of from 100g - 400g a.i./100Kg seed and an insecticide, such as a neonicotinoid, (B) is applied at a rate of from 300g - 500g a.i./100Kg seed.

As a specific example, abamectin is applied at a rate of 100g/100Kg seed. In one embodiment, abamectin is applied at 0.1 to 0.15 mg/seed or, in particular, 0.1 mg/seed.

In particular, it has now been found, surprisingly, that, for example, the pesticidal activity of the compositions according to the invention, compared with the pesticidal activity of the individual components, is not merely additive, as may essentially be expected, but that a synergistic effect exists. The term "synergistic" is not, however, in any way limited in this context to the pesticidal activity, but refers equally to other advantageous properties of the compositions according to the invention as compared with the individual components. Examples of such advantageous properties that may be mentioned are: a broadening of the spectrum of pesticidal activity to other pests, for example to resistant strains; a reduction in the rate of application of the active ingredients; adequate control of the pests with the aid of the compositions according to the invention, even at a rate of application at which the individual compounds are totally ineffective; advantageous behavior during formulating and/or upon application, for example upon grinding, sieving, emulsifying, dissolving or dispersing; increased storage stability; improved stability to light; more advantageous degradability; improved toxicological and/or ecotoxicological behavior; improved crop characteristics including: emergence, crop yields, plant stand, more developed root system, tillering increase, increase in plant height, bigger leaf blade, less dead basal leaves, stronger tillers, greener leaf color, less fertilizers needed, less seeds needed, more productive tillers, earlier flowering, early grain maturity, less plant verse (lodging), increased shoot growth, improved plant vigor, and early germination; or any other advantages familiar to a person skilled in the art.

The active ingredient combination utilized in the seed treatment composition according to the invention preferably comprises abamectin and thiamethoxam in a ratio of from 100 - 400g abamectin/100Kg seed to 300g - 500g thiamethoxam/100Kg seed.

In one embodiment, at least one antimicrobially active substance (C) (also known as a fungicide) is employed with to the at least two-component mixture of (A) and (B) to increase the spectrum of action or to achieve particular effects such as, for example, providing fungicidal control. Suitable fungicide classes include the phenylamides, phenylpyrroles, strobilurins and the triazoles.

In one embodiment, the seed treatment composition and method(s) of the invention are combined with one or more foliar and/or in-furrow insecticide and/or fungicide treatments. Suitable insecticides, include, for example, Temik^{®}(aldicarb), thiamethoxam, imidacloprid and clothianidin. Suitable fungicides include metalaxyl, R-metalaxyl, the stobilurins such as azoxystrobin, the triazoles such as myclobutanil, fludioxonil, triadimenol, TCMTB, PCNB, carboxin and chloroneb. Temik^{®} is also an in-furrow nematicide.

### Insect Pests

The compositions according to the invention may be used for the protection of the plant propagation material and developing plants against animal pests such as insects and representatives of the order Acamia including:
from the order Lepidoptera, for example,
   Acleris spp., Adoxophyes spp., Aegeria spp., Agrotis spp., Alabama argillaceae, Amylois spp., Anticarsia gemmatalis, Archips spp., Argyrotaenia spp., Autographa spp., Busseola fusca, Cadra cautella, Carposina nipponensis, Chilo spp., Choristoneura spp., Clysia ambiguella, Cnaphalocrocis spp., Cnephasia spp., Cochylis spp., Coleophora spp., Crocidolomia binotalis, Cryptophiebia leucotreta, Cydia spp., Diatraea spp., Diparopsis castanea, Earias spp., Ephestia spp., Eucosma spp., Eupoecilia ambiguella, Euproctis spp., Euxoa spp., Grapholita spp., Hedya nubiferana, Heliothis spp., Hellula undalis, Hyphantria cunea, Keiferia lycopersicelia, Leucoptera scitella, Lithocollethis spp., Lobesia botrana, Lymantria spp., Lyonetia spp., Malacosoma spp., Mamestra brassicae, Manduca sexta, Operophtera spp., Ostrinia nubilalis, Pammene spp., Pandemis spp., Panolis flammea, Pectinophora gossypielia, Phthorimaea operculella, Pieris rapae, Pieris spp., Plutella xylostella, Prays spp., Scirpophaga spp., Sesamia spp., Sparganothis spp., Spodoptera spp., Synanthedon spp., Thaumetopoea spp., Tortrix spp., Trichoplusia ni and Yponomeuta spp.;
from the order Coleoptera, for example,
   Agriotes spp., Anthonomus spp., Atomaria linearis, Chaetocnema tibialis, Cosmopolites spp., Curculio spp., Dermestes spp., Diabrotica spp., Epilachna spp., Eremnus spp., Leptinotarsa decemlineata, Lissorhoptrus spp., Melolontha spp.. Orycaephilus spp., Otiorhynchus spp., Phlyctinus spp., Popillia spp., Psylliodes spp., Rhizopertha spp., Scarabeidae, Sitophilus spp., Sitotroga spp., Tenebrio spp., Tribolium spp. and Trogoderma spp.;
from the order Orthoptera, for example,
   Blatta spp., Blattella spp., Gryllotaipa spp., Leucophaea maderae, Locusta spp., Periplaneta spp. and Schistocerca spp.;
from the order Isoptera, for example,
   Reticulitermes spp.;
from the order Psocoptera, for example,
   Liposcelis spp.;
from the order Anoplura, for example,
   Haematopinus spp., Linognathus spp., Pediculus spp., Pemphigus spp. and Phylloxera spp.; from the order Mallophaga, for example,
   Damalinea spp. and Trichodectes spp.;
from the order Thysanoptera, for example,
   Frankliniella spp., Hercinothrips spp., Taeniothrips spp., Thrips palmi, Thrips tabaci and Scirtothrips aurantii;
from the order Heteroptera, for example,
   Cimex spp., Distantiella theobroma, Dysdercus spp., Euchistus spp., Eurygaster spp., Leptocorisa spp., Nezara spp., Piesma spp., Rhodnius spp., Sahlbergella singularis, Scotinophara spp. and Triatoma spp.;
from the order Homoptera, for example,
   Aleurothrixus floccosus, Aleyrodes brassicae, Aonidiella spp., Aphididae, Aphis spp., Aspidiotus spp., Bemisia tabaci; Ceroplaster spp., Chrysomphalus aonidium. Chrysomphalus dictyospermi, Coccus hesperidum, Empoasca spp., Eriosoma larigerum, Erythroneura spp., Gascardia spp., Laodelphax spp., Lecanium comi, Lepidosaphes spp., Macrosiphus spp., Myzus spp., Nephotettix spp., Nilaparvata spp., Paratoria spp., Pemphigus spp., Planococcus spp., Pseudaulacaspis spp., Pseudococcus spp. Psylla spp. Pulvinaria aethiopica, Quadraspidiotus spp., Rhopalosiphum spp., Saissetia spp.,Scaphoideus spp., Schizaphis spp., Sitobion spp., Trialeurodes vaporariorum, Trioza erytreae and Unaspis citri;
from the order Hymenoptera, for example,
   Acromyrmex, Atta spp., Cephus spp., Diprion spp., Diprionidae, Gilpinia polytoma, Hoplocampa spp., Lasius spp., Monomorium pharaonis, Neodiprion spp., Solenopsis spp. and Vespa spp.; from the order Diptera, for example,
   Aedes spp., Antherigona soccata, Bibio hortulanus, Calliphora erythrocephala, Ceratitis spp., Chrysomyia spp., Culex spp., Cuterebra spp., Dacus spp., Drosophila melanogaster, Fannia spp., Gastrophilus spp., Glossina spp., Hypoderma spp., Hyppobosca spp., Liriomyza spp., Lucilia spp., Melanagromyza spp., Musca spp., Oestrus spp., Orseolia spp., Oscinella frit, Pegomyia hyoscyami, Phorbia spp., Rhagoletis pomonella, Sciara spp., Stomoxys spp., Tabanus spp., Tannia spp. and Tipula spp.;
from the order Siphonaptera, for example,
   Ceratophyllus spp. und Xenopsylla cheopis and
from the order Thysanura, for example,
   Lepisma saccharina.

The pests found to be surprisingly controlled are shoot or foliar pests, such as Frankliniella spp.,

### Nematode Pests

Examples of representatives of the class Nematoda which may be controlled by the compositions of the invention include, for example: root knot nematodes, stem eelworms and foliar nematodes; especially *Heterodera spp.,* for example *Heterodera schachtii, Heterodora* avenae and Heterodora trifolii; Hoplolaimus spp. such as Hoplolaimus galeatus and Hoplolaimus columbus; Globodera spp., for example Globodera *rostochiensis; Meloidogyne spp.,* for example *Meloidogyne incoginita* and *Meloidogyne javanica; Radopholus spp.,* for example *Radopholus similis; Rotylenchulus spp.* such as *R. reniformis; Pratylenchus spp.,* for example *Pratylenchus neglectans* and *Pratylenchus penetrans; Tylenchulus spp.,* for example *Tylenchulus semipenetrans; Belonolaimus spp.; Longidorus spp.; Trichodorus spp.; Xiphinema spp.; Ditylenchus spp.; Aphelenchoides spp.;* and *Anguina spp.;* in particular *Meloidogyne spp.,* for example *Meloidogyne incognita,* and *Heterodera spp.,* for example *Heterodera glycines.*

### Target Crops

Target crops within the scope of this invention are, for example, the following plant species: beet (sugar beet and fodder beet), oil plants (canola, rape, mustard seed, poppy, olives, sunflowers, coconut, castor oil plants, cocoa beans, groundnuts and soya). There also may be mentioned peanuts, wheat sorghum, cotton, com, soybeans, tobacco, cole, cabbages, onions and carrots.

Other suitable crops within the scope of the invention include potato, mint, grass forage and hay as well as the herb subgroup.
In addition, the crops listed in the crop group tables in 40 CFR Sec. 180.41 (1995) are noted. 40 CFR Sec- 180.41 (1995) and the Federal Register: May 17, 1995 (vol. 60, no. 95) pp. 26625 - 26643 are fully incorporated by reference herein for their disclosure relating to useful crop plants:
(1) Crop Group 5: Brassica (Cole) Leafy Vegetables Group, for example, broccoli, cauliflower; cabbage; and mustard greens;
(2) Crop Group 9: Cucurbit Vegetables Group, for example, cucumber, melons, cantaloupe, muskmelon, squash incl, summer squash;
(3) Crop Group 11: Pome Fruits Group, for example, apple and pear;
(4) Crop Group 15: Cereal Grains Group, for example, corn and rice.

There also may be mentioned the fruiting vegetables group, for example, tomatoes and peppers.

The following plants are to regarded as being particularly suitable target crops for the at least binary (e.g. abamectin and thiamethoxam) pesticide compositions of the invention: plant propagation materials (such as seeds) of oil plants (canola, rape, mustard seed, poppy, olives, sunflowers, coconut, castor oil plants, cocoa beans, groundnuts).

The target crops and the seeds treated in accordance with the invention include conventional as well as genetically enhanced or engineered varieties such as, for example, insect resistant (e.g., Bt. And VIP varieties) as well as disease resistant, herbicide tolerant and nematode tolerant varieties. By way of example, suitable genetically enhanced or engineered crops varieties include the Stoneville 5599BR cotton and Stoneville 4892BR cotton varieties.

### Seed Treatment

The pesticidal composition according to the invention has proved especially advantageous for protecting seeds, in particular, seeds of cotton, fruiting vegetables incl. tomatoes and peppers, cucurbit vegetables incl, melons, cantaloupes, squash and cucumber. However, the inventive composition is also suitable for direct treatment of the soil or of other parts of the plant. The inventive composition is well tolerated by plants, and is ecologically acceptable.

An especially preferred embodiment of the present invention is the treatment of plant propagation material by a composition according to the invention before the material is sown or planted. It has been found that such treatment by a nematicide provides unexpected shoot or foliar pest control.

The subject of the invention is also a method for protecting the multiplication products of plants (plant propagation materials) and the plants resulting therefrom against nematodes and fungal diseases, wherein the said multiplication products are coated with a nematicidal and insecticidal and substantially non-phytotoxic composition containing a fungicide.

The at least binary pesticidal composition according to the invention is usually employed together with the adjuvants customary in formulation technology. The combination of the active ingredients (A) and at least one of (B1), (B2) and (B3) are normally applied to plant propagation material in the form of compositions, but also can be applied to the seed or to the locus of propagation thereof (such as a furrow), simultaneously or in succession, with further compounds. These further compounds can be fertilizers or micronutrient donors or other preparations that influence plant growth. They can also be selective herbicides, insecticides, fungicides, bactericides, insect growth regulators, plant growth regulators, foliar or soil applied nematicides, molluscicides or mixtures of several of these preparations, if desired, together with further carriers, surfactants or application-promoting adjuvants customarily employed in the art of formulation. In addition, there may be mentioned inoculants, brighteners and polymers.

This invention also includes suitable agricultural compositions for controlling nematodes and insects on or in seed consisting essentially of an at least binary pesticidal composition of this invention plus a suitable inert surfactant or an suitable inert liquid or a solid carrier. As used herein, the phrase "consisting essentially of does not exclude the presence of other active pesticidal materials or conventional formulating ingredients.

The active components (A) and at least one of (B1), (B2) and (B3) are processed in known manner to give, for example, emulsifiable concentrates, suspoemulsions, spreadable pastes, directly sprayable or dilutable solutions, dilute emulsions, wettable powders, soluble powders, dusts, granules, and also for encapsulation in, for example, polymeric substances or in the form of so-called tank mixes which are prepared by concomitant dilution of the separately formulated components with water immediately prior to application. The application methods, such as spraying, misting, atomising, broadcasting, brushing or pouring, and the nature of the composition are adapted to suit the intended aims and the prevailing circumstances. Optimum rates of application of the inventive composition, for a particular target nematode and set of insect pressure conditions, can be determined easily and without undue experimentation by simple ranging studies carried out in greenhouse or field settings. In general, favorable rates of application are 0.05 to not more than 1 kg, in particular 0.1 - 0.5 kg, more particularly 0.3 - 0.5 kg of each active ingredient (B1), (B2) and (B3) per 100 kg of propagation material to be protected. With respect to the active ingredient (A), the favorable rates of application can range from 0.005 to not more than 0.8 kg, in particular 0.01-0.5 kg, more particularly 0.1 - 0.4 kg per 100 kg of propagation material be protected. However, the application conditions depend essentially on the nature (surface area, consistency, moisture content) of the material and on its environmental factors. Accordingly, within these ranges, those skilled in the art will choose, on the basis of their general body of knowledge and, where appropriate, a few experiments, doses which are non-phytotoxic but effective from an insecticidal and/or nematicidal standpoint.

The term "plant propagation material" is understood to denote all the generative parts of the plant such as seeds which can be used for the multiplication of the latter and vegetative plant material such as cuttings and tubers (for example potatoes). There may be mentioned, e.g., the seeds (in the strict sense), roots, fruits, tubers, bulbs, rhizomes, parts of plants. Germinated plants and young plants which are to be transplanted after germination or after emergence from the soil, may also be mentioned. These young plants may be protected before transplantation by a total or partial treatment by immersion.

The techniques of seed treatment application are well known to those skilled in the art, and they maybe used readily in the context of the present invention. The active ingredients can be formulated and applied as a slurry, a solid seed coating, a soak, or as a dust on the surface of the seed. There also-may be mentioned, e.g., film-coating or encapsulation. The coating processes are well known in the art, and employ, for seeds, the techniques of film-coating or encapsulation, or for the other multiplication products, the techniques of immersion. Needless to say, the method of application of the compounds to the seed may be varied and the invention is intended to include any technique which is to be used.

A preferred method of applying the mixture according to the invention consists in spraying or wetting the plant propagation material with a liquid preparation, or mixing the plant material with a solid preparation of the active ingredients.

The compounds of this invention may be formulated or mixed in the seed treater tank or combined on the seed by overcoating with other seed treating agents. The agents to be mixed with the compounds of this invention may be for the control of pests, modification of growth, nutrition, or for the control of plant diseases.

### Formulations

The formulations, i.e. the compositions, preparations or combinations containing the active ingredients (A) and (B1), (82) and/or (B3), as well as, if appropriate, suitable inert solid or liquid carriers, are prepared in a known manner, for example by intimately mixing and/or grinding the active ingredients with inert, agriculturally-accepfiable extenders, for example with solid or liquid carriers and, if appropriate, surface-active compounds (surfactants). Such compositions may be advantageously formulated as flowable compositions, suspensions, microsuspensions, suspoemulsions, wettable powders, granulated concentrates, microemulsions and the like, all of which lend themselves to seed treatment application and provide the requisite plant protection.

The term "carrier" in the present description denotes a natural or synthetic, organic or inorganic material with which the active substance is combined in order to facilitate its application to the plant, to the seeds or to the soil. This carrier is hence generally inert, and it must be agricultural acceptable, in particular to the plant being treated. The carrier may be solid (clays, natural or synthetic silicates, silica, resins, waxes, solid fertilizers, and the like) or liquid (water, alcohols, ketones, petroleum fractions, aromatic or paraffinic hydrocarbons, chlorinated hydrocarbons, liquefied gases, and the like).

Suitable liquid carriers are: aromatic hydrocarbons, in particular the fractions C₈ to C₁₂, such as xylene mixtures or substituted naphthalenes, phthalic esters such as dibutyl or dioctyl phthalate, aliphatic hydrocarbons such as cyclohexane or paraffins, alcohols and glycols as well as their ethers and esters, such as ethylene glycol monomethyl ether, ketones such as cyclohexanone, strongly polar solvents such as N-methyl-2-pyrrolidone, dimethyl sulfoxide or dimethylformamide, and, if appropriate, epoxidized vegetable oils or soybean oil; or water.

Solid carriers which may be used, for example for dusts and dispersible powders, are calcite, talc, kaolin, montmorillonite or attapulgite, highly-disperse silica or absorptive polymers. Possible particulate, adsorptive carriers for granules are pumice, crushed brick, sepiolite or bentonite, montmorillonite-type clay, and possible nonsorbent carrier materials are calcite or dolomite.

Suitable surface-active compounds are non-ionic, cationic and/or anionic surfactants having good emulsifying, dispersing and wetting properties, depending on the nature of the active ingredients (A) and (B1), (B2) and/or (B3) to be formulated (whether individually or in one of the various permutations and combinations). Surfactants will also be understood as meaning mixtures of surfactants.

The surfactants customarily employed in formulation technology are described, inter alia, in the following publications:
"McCuteheon's Detergents and Emulsifiers Annual", MC Publishing Corp., Glen Rock, N.J., 1988. M. and J. Ash, "Encyclopedia of Surfactants", Vol. I-III, Chemical Publishing Co., New York, 1980-1981.

Among the suitable surfactants there may be mentioned, e.g., polyacrylic acid salts, lignosulphonic acid salts, phenolsulphonic or (mono- or di-alkyl)naphthalenesulphonic acid salts, laurylsulfate salts, polycondensates of ethylene oxide with lignosulphonic acid salts, polycondensates of ethylene oxide with fatty alcohols or with fatty acids or with fatty amines, substituted phenols (in particular alkylphenols or arylphenols such as mono- and di-(polyoxyalkylene alkylphenol) phosphates, polyoxyalkylene alkylphenol carboxylates or polyoxyalkylene alkylphenol sulfates), salts of sulphosuccinic acid esters, taurine derivatives (in particular alkyltaurides), polycondensates of ethylene oxide with phosphated tristyrylphenols and polycondensates of ethylene oxide with phosphoric esters of alcohols or phenols. The presence of at least one surfactant is often required because the active substance and/or the inert vehicle are not soluble in water and the carrier agent for the application is water.

Furthermore, particularly useful adjuvants which enhance application are natural or synthetic phospholipids from the series of the cephalins and lecithins, for example phosphatidylethanolamine, phosphatidylserine, phosphatidylglycerine or lysolecithin.

The agrochemical compositions generally contain: 0.1 to 99%, in particular 10 to 75%, more particularly 20 to 60% of the active substances (A) and (B1), (B2) and/or (83); the balance of the formulation comprising a solid and/or liquid carrier (such as water, for example) along with optional surfactant(s)' and other optional inert ingredients known in the art such as, e.g., protective colloids, adhesives, thickeners, thixotropic agents, penetrating agents, preservatives, stabilizers, antifoaming agents, antifreeze agents, sequestering agents, dyes, pigments, colorings and polymers.

In one embodiment, commercial products will preferably be formulated as concentrates whereas the end user will normally use dilute formulations.

In one embodiment, the formulation containing the macrolides compound, especially abamectin, is an aqueous suspension and comprises, as formulation adjuvants, at least two surface active compounds, wherein (i) at least one surface active compound has a molecular weight of less than 2'200, preferably less than 1700, such as in the range 400 to 1500, advantageously in the range 600 to 1200, and a Hydrophile-Lipophilic Balance (HLB) of at least 10, preferably in the range 10 to 25, such as 12 to 20, preferably 14 to 18 and (ii) at least one surface active compound is non-ionic, has a molecular weight of at least 2200, preferably at least 3000, such as in the range of 3500 to 15000, for example, 3500 to 10000, especially 4000 to 7500, advantageously 4500 to 6000, wherein 10 to 85, such as 15 to 80, preferably 17 to 50, % of the compound molecular weight contributes to the hydrophile constituent of the compound, and, independent of the hydrophile proportion, the molecular weight of the hydrophobe constituent of the compound is from 2000 to 10000, preferably 2400 to 3900, more preferably 3000 to 3800, such as 3200 to 3700; provided that the weight ratio of surface active compound to the macrolide compound is in the range 0.08 to 0.5, preferably 0.1 to 0-3, advantageously 0.15 to 0.25, and the weight ratio of (ii):(i) is at least 0.5, such as at least 1.0, preferably at least 1.5, especially in the range 2 to 5, advantageously in the range 2 to 3. Advantageously, three surface active compounds, one of (i) and two of (ii), are used in the formulation. Examples of a suitable surface active compound (i) is ionic, advantageously an anionic, surfactant; such as selected from a sulfate type (e.g., an aryl sulfate) and a phosphate type (such as an alkylphenol polyalkoxyether phosphate, a block copolymer of polyalkoxyether phosphate, polyarylphenol polyalkoxyether phosphate and an arylphenol polyalkoxyether phosphate), especially a phosphate type surfactant (such as a polyarylphenol polyalkoxyether phosphate). It is particularly desired that each (i) surface active compound is of the same type, a preferred type is a phosphate type surfactant. Specific examples of suitable anionic surfactants include: Sorprophor PS19 (Rhodia), Dowafax 30 C05 (Dow), Soprophor 4D384 (Rhodia) and Soprophor 3D33 (Rhodia). Examples of a suitable surface active compound (ii) is a polyalkylene oxide polymer, such as a block polymer. Specific examples are polyoxyethylene polyoxypropylene block polymers, and polyoxyethylene polyoxypropylene block, polymer ethers and specific examples include Toximul 8320 (Stepan), Emulsogen 3510 (Clariant), Antarox PL/122 (Rhodia), Pluronic L101 (BASF), Pluronic L122 (BASF) and Pluronic PE 10500 (BASF).

In another embodiment, the formulation containing the macrolides compound, especially abamectin, is an aqueous suspension and comprises, as formulation adjuvants, at least two surface active compounds, wherein (a) at least one is an anionic phosphate type compound, and (b) at least one is a non-ionic alkoxylated alcohol or phenol. In an embodiment, the molecular weight of the (a) and (b) surface active compounds, independent of each other, is less than 2200, preferably less than 1700, such as in the range 400 to 1500, preferably in the range 600 to 1200. The (a) surface active compound preferably has a Hydrophile-Lipophilic Balance (HLB) of of at least 10, preferably in the range 10 to 25, such as 12 to 20, preferably 14 to 18; and the (b) surface active compound preferably has a Hydrophile-Lipophilic Balance (HLB) of at least 5, preferably 7 to 20, such as 10 to 15. The weight ratio of surface active compounds (a) to (b) is generally in the range of 1:10 to 10:1, preferably, 5:1 to 1:1, especially 3:1 to 1:1. Examples of a phosphate type surfactant include an alkylphenol polyalkoxyether phosphate, a block copolymer of polyalkoxyether phosphate, a polyarylphenol polyalkoxyether phosphate and an arylphenol polyalkoxyether phosphate. Examples of alkoxylated alcohols include an alkoxylated alcohol (such as alkoxylated oil, alkoxlated alcohol having C5 to C18 carbon atoms in the alcohol). Examples of alkoxylated phenols include alkylphenol polyalkoxyether and (poly)arylphenol polyalkoxyether. Preferably, the (b) compound is an alkoxylated phenol. Specific examples of suitable anionic surfactants include: Soprophor 3D33 (Rhodia), Sorprophor PS19 (Rhodia) and Dowafax 30 C05 (Dow), and specific examples of non-ionic surfactants include: Synperonic NP (Uniqema), Soprophor BSU (Rhodia), Rhodasurf BC-610 (Rhodia), Toximul 8240 (Stepan) and Synperonic 91/4 (Uniqema).

The anionic surfactants may be present as acids or include alkali metals (such as lithium, sodium and potassium), alkali earth metals (such as calcium and magnesium), ammonium and various amines (such as alkylamines, cycloalkylamines and alkanolamines).

The Hydrophile-Lipophilic Balance (HLB) value is an index of the hydrophilic nature of a compound proposed by Griffin. The HLB value of a polyoxyethylene alkyl ether can be determined by, for example, the Griffin equation.

HLB value = [(molecular weight of the hydrophilic moiety)/(molecular weight of the surface active compound)] x 20

Groups, for example, sulfate and phosphate ions, can also contribute to the HLB value.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is preferably not meant to include those practices in which the pesticide is applied to the soil, rather than to the seed. For example, such treatments as the application of the pesticide in bands, "T"-bands, or in-furrow, at the same time as the seed is sowed are not preferably considered to be included in the present invention.

The formulation may be applied to the seeds using conventional coating techniques and machines, such as fluidized bed techniques, the roller mill method, rotostatic seed treaters, and drum coaters. Other methods, such as spouted beds may also be useful. The seeds may be presized before coatihg. After coating, the seeds are typically dried and then transferred to a sizing machine for sizing. Such procedures are known in the art.

The examples which follow are intended to illustrate and not limit the invention.

### FORMULATION EXAMPLES (% = per cent by weight)

### EXAMPLE 1

An abamectin formulation is prepared by mixing surfactant(s), thickening agent, polymer, suspension aid, a defoaming agent, a preservative and an antifreeze agent, with water until a homogeneous phase is achieved. Subsequently, abamectin is added and is mixed. The resulting mixture is then wet-milled through a su-called bead mill (Dyno, Drais, Premier for instance). The milling parameters are set in such a way that the average particle size of the resulting ground premix is within specifications (usually median particle size average at most 2.0um). Finally, the buffer (if any) and a minor amount of water are added and the final product is mixed for at least 30 minutes.

| Example 1: FS | % w/w |
|---|---|
| Abamectin | 46.3 |
| Styrylphenol polyethoxyester phosphate | 1.5 |
| Propylene glycol | 5.0 |
| Tristyrenephenol with 16 moles EO | 1.0 |
| Silicone defoaming agent | 0.2 |
| Preservative | 0.06 |
| Linear polysaccharide | 0.2 |
| Water | (rest) |

### EXAMPLE 2

This formulation is suitable for mixtures of solid and liquid active ingredients. The solid active ingredient(s) are mixed thoroughly with a portion of the emulsifiers and water and the mixture is ground thoroughly in a suitable mill. Another portion of the emulsifiers and water are mixed with the liquid active ingredient(s). The two mixtures are combined along with any other inert ingredients (such as pigments, thickeners, etc.) that are to be used in the formulation.

| Example 2: FS | % w/w |
|---|---|
| active ingredients (azoxystrobin:fludioxonil:R-metalaxyl) (15: 2.5: 7.5) | 12.5 |
| Propylene glycol | 7.0 |
| Titanium dioxide | 10.0 |
| Styrylphenol polyethoxyester phosphate | 2.0 |
| Tristyrenephenol with 16 moles EO | 2.0 |
| Copolymer butanol PO/EO | 2.0 |
| Sodium Hydroxide (30%) | 0.3 |
| Silicone defoaming agent | 0.2 |
| Aqueous dispersion based on vinyl acetate and ethylene | 10.0 |
| Heteropolysaccharide | 0.35 |
| Preservative | 0.15 |
| Water | rest |

### Example 3 - Preparation of Tank Mix Seed Treatment Formulation

The seed treatment compositions of examples 1 and 2 are combined in a slurry with the following off-the-shelf seed treatment products: Cruiser^{®} 5 FS (thiamethoxam) and Systhane^{®} 40 WP (myclobutanil) in an amount sufficient to achieve an active ingredient concentration of 100g a.l/100Kg seed (example 1):25g a.l/100Kg seed (example 2):21g a.i/100Kg seed (myclobutanil) and 30g a.i./100,000.seeds (thiamethoxam). The final combined composition is suitable to be applied to seed by spraying, wetting or mixing in a container having a volume of from 200ml to 3 liters of the final combined composition per 100kg of seed. The active ingredient is distributed uniformly on the seed surface by rotating and/or shaking the container.

No phytotoxicity is observed with cotton seeds that have been dressed with the formulation of example 3. Suitable control of insect and nematode pests are achieved.

### Example 4 - BIOLOGICAL EXAMPLES

### Introduction:

This example compares the efficacy of thiamethoxam (CAS# 153719-23-4), abamectin (CAS# 65195-56-4 and No. 65195-55-3) and the combination of both compounds used as a seed treatment to control insects (thrips) on cotton.

### Control - base fungicide seed treatment only (no insecticide or nematicide)

(a) A base fungicide seed treatment formulation is prepared by diluting a concentrate containing 3.32% mefenoxam (CAS# 70630-17-0), 1.11% fludioxonil (CAS# 131341-86-1) and 6.64% azoxystrobin (CAS# 139860-33-8), into water as a carrier. This formulation dilution is applied for one to two minutes at ambient temperature to approximately one kilogram of Delta and Pine Land cottonseed (DP 555 BR) in a Hege seed treater (Hege) at a rate of 0.30 mg active ingredient per each individual seed. Seed treated are allowed to air dry and shipped and stored at ambient temperature prior to planting (approximately two weeks).

### Thiamethoxam treated seed

(b) A seed treatment formulation is prepared by diluting Cruiser® 5FS seed treatment insecticide (Syngenta Crop Protection, Inc), which contains 49% thiamethoxam and the base fungicide concentrate described in (a), into water as a carrier. This formulation dilution is applied for one to two minutes at ambient temperature to approximately one kilogram of Delta and Pine Land cottonseed (DP 555 BR) in a Hege seed treater at a rate of 0.34 mg active ingredient per each individual seed. Seed treated are allowed to air dry and shipped and stored at ambient temperature prior to planting (approximately two weeks).

### Abamectin treated seed

(c) An abamectin seed treatment formulation is prepared by diluting an abamectin 500FS seed treatment nematicide formulation containing 46.3% abamectin and the base fungicide concentrate (a), into water as a carrier. This formulation dilution is applied for one to two minutes at ambient temperature to approximately one kilogram of Delta and Pine Land cottonseed (DP 555 BR) in a Hege seed treater at a rate of 0.15 mg active ingredient per each individual. Seed treated were allowed'to air dry and were shipped and stored at ambient temperature prior to planting (approximately two weeks).

### Combination Treatment

The above formulations of thiamethoxam and abamectin were combined together into water as a carrier and with the base fungicide (a). Thiamethoxam and abamectin were applied at rates of 0.34 and 0.1a mg active per seed respectfully. This formulation dilution was applied for one to two minutes at ambient temperature to approximately one kilogram of Delta and Pine Land cottonseed (DP 555 BR) in a Hege seed treater. Seed treated were allowed to air dry and were shipped and stored at ambient temperature prior to planting (approximately two weeks).

Control (a) and treated cottonseed (b) (c) and (d) were planted in field plots in two separate trials (1) and (2) as follows:

Cottonseed is sown (4 seeds per foot) in plots with dimensions of 2 rows (36 inch row spacing) by 30-feet in a randomized complete block layout consisting of an control check (a), abamectin plus a base fungicide (c), thiamethoxam plus a base fungicide (b) and the combination of thiamethoxam and abamectin plus a base fungicide (d).

The following data is collected from these trials: 1) number of adult thrips per five plants, 2) the number of immature thrips per five plants, and plant damage. Thrips were collected from five random plants within each replication of each treatment by collecting thrips in alcohol and counting the numbers of thrips using a dissecting scope in the laboratory. Damage ratings were made within each replication per treatment using a visual rating scale that rates for plant damage (stunting, crinkling of the leaves, etc) on a scale from 1 to 5 (1 = no damage, 3 = moderate damage and 5 = severe damage).

**Table 1. Thrips control in cotton at a research farm -Trial (1)**

| | Immature Thrips | | Adult Thrips | Damage |
|---|---|---|---|---|
| | 14 DAP | 21 DAP | 14 DAP | 21 DAP |
| Control (a) | 81.5 | 90.75 | 23.5 | 4-5 |
| Thiamethoxam (b) | 13 | 20.25 | 5 | 3.3 |
| Abamectin (c) | 39.25 | 50.5 | 13 | 4 |
| Thiamethoxam + | 3.5 | 11.5 | 6.25 | 3.12 |
| Abamectin (d) | | | | |

**Table 2. Thrips control in cotton at a research farm - Trial (2)**

| | immature Thrips |
|---|---|
| | 14 DAP |
| Control (a) | 137.5 |
| Thiamethoxam (b) | 15 |
| Abamectin (c) | 71.5 |
| Thiamethoxam + | 3.75 |
| Abamectin (d) | |

The results from these trials indicate that the efficacy of the combination seed treatment (d) that includes thiamethoxam and abamectin is better than the thiamethoxam (b) and the abamectin (c) seed treatments alone. These findings have been documented for multiple trials for both immature and adult thrips in cotton (Table 1 and Table 2). In trials 1 and 2, the untreated control had the highest amount of thrips followed by the abamectin alone treatment. The abamectin alone treatment did offer some thrips activity (~50% control when compared to the untreated check. These results were surprising due to the fact that abamectin is not systemic. Thiamethoxam treated cottonseed (b) provided approximately 85% thrips control 14 and 21 days after planting, while the combination of thiamethoxam and abamectin (d) provided greater than 95% control of thrips

In summary, it is seen that this invention provides a new at least binary pesticidal composition for the protection of plant propagation materials. Variations may be made in proportions, procedures and materials without departing from the scope of the invention as defined by the following claims.

## Claims

1. A method of protecting a plant against insects selected from the order Thysanoptera and Diptera, which comprises treating the plant propagation material thereof, with (a) a nematicidally effective amount of a nematicide selected from abamectin, emamectin benzoate and spinosad and optionally (b) at least one insecticidally effective amount of an insecticide selected from imidacloprid, clothianidin and thiamethoxam.

2. The method according to claim 1 wherein the nematicide is abamectin.

3. The method according to either claim 1 or claim 2 wherein the insecticide is thiamethoxam.

4. The method according to any one of claims 1 to 3 wherein the ratio of active ingredients (A):(B) is (1 00g - 400g):( 300g - 500g) per 100 Kg/seed.

5. The method according to any one of claims 1 to 4 wherein said plant propagation material is further treated with a fungicidally effective amount of (C) a compound selected from azoxystrobin, fludioxonil, R-metalaxyl and myclobutanil.

6. The method according to any one of claims 1 to 5 wherein said plant propagation material is a plant seed selected from cotton, tomatoes, peppers, melons, cantaloupes, squash and cucumber.
